# EUROPÄISCHE PATENTSCHRIFT

(11) **EP 2 209 198 B1**
(45) Veröffentlichungstag und Bekanntmachung des Hinweises auf die Patenterteilung: **16.08.2017**
(21) Anmeldenummer: 10150569.1
(22) Anmeldetag: 12.01.2010
(51) Int. Cl.: H02J 9/00

(54) **Netzteil**
Power supply
Partie de réseau

(30) Priorität: 15.01.2009 DE 102009004723
(43) Veröffentlichungstag der Anmeldung: 21.07.2010
(73) Patentinhaber: Fujitsu Technology Solutions Intellectual Property GmbH, 80807 München (DE)
(72) Erfinder: Böttner, Helmut, 86399, Bobingen (DE); Pötsch, Edmund, 86343, Königsbrunn (DE)
(74) Vertreter: Epping - Hermann - Fischer

(56) Entgegenhaltungen:
- EP-A2- 0 758 153
- WO-A1-01/52280
- US-A- 4 218 648
- US-A- 5 705 891
- US-B1- 6 339 314

## Beschreibung

Die Erfindung betrifft ein Netzteil zur Erzeugung einer sekundärseitigen Ausgangsspannung aus einer primärseitigen Netzspannung.

Netzteile dieser Art werden vielfach zur Versorgung von elektrischen und elektronischen Geräten eingesetzt. Das Netzteil kann dabei in das Gerät integriert sein oder als externes Netzteil ausgeführt sein, an das das elektrische Gerät über ein entsprechendes Anschlusskabel zur Stromversorgung angeschlossen wird. Externe Netzteile, insbesondere solche mit nur kleiner bereitgestellter Leistung, werden häufig als so genannte Steckernetzteile ausgeführt, bei denen der Netzstecker unmittelbar am Gehäuse des Netzteils ausgebildet ist. Eine ähnliche Ausführung ist bei Kleinstgeräten bekannt, zum Beispiel bei Batterieladegeräten, bei denen das Gerät, das Netzteil und der Stecker eine Einheit bilden.

Aus Gründen der Kosteneinsparung oder aus Designgründen weisen Netzteile häufig keinen manuellen Schalter auf, über den ein Spannungswandler oder Übertrager des Netzteils primärseitig von der Netzspannung getrennt werden kann. Als Folge bleiben viele Netzteile dauerhaft primärseitig mit dem Stromnetz verbunden, obwohl ihnen sekundärseitig keine Leistung abverlangt wird. Auch in einem solchen Leerlauf- oder Stand by-Betrieb nimmt das Netzteil jedoch Leistung auf, die in Form von Wärme abgegeben wird. Zur Vermeidung der Leerlaufstromaufnahme eines Netzteils sind zum Beispiel schaltbare Zwischenstecker bekannt, die jedoch ein manuelles Schalten durch einen Benutzer erfordern. Weiterhin ist bekannt, ein Schaltelement primärseitig in einem Netzteil vorzusehen, das von einem Gerät, das von dem Netzteil versorgt wird, je nach Leistungsbedarf des Gerätes ein- oder ausgeschaltet wird. Eine solche Anordnung erfordert jedoch zusätzlich zu Stromversorgungsleitungen eine Steuerleitung zwischen dem Gerät und dem Netzteil zur Betätigung des Schaltelements, was zusätzlichen Herstellungsaufwand und Kosten verursacht und mit bestehenden üblicherweise eingesetzten Steckverbindern zwischen Netzteil und Gerät inkompatibel ist.

Weiterhin sind sogenannte "Master-Slave"-Steckdosenleisten bekannt, die eine dauerhaft mit Strom versorgte Steckdose ("Master") aufweisen und eine Reihe weiterer Steckdosen ("Slave"), die mittels eines Schaltelements geschaltet ein- und aus geschaltet werden können. Der Stromverbrauch an der "Master"-Steckdose wird gemessen und abhängig davon über das Schaltelement die "Slave"-Steckdosen ein- oder ausgeschaltet. Auf diese Weise werden von einem Hauptgerät, wie zum Beispiel einem Computer, abhängige weitere Geräte, wie zum Beispiel ein Drucker, automatisch mit dem Hauptgerät an- und abgeschaltet. Das Hauptgerät an der "Master"-Steckdose und damit auch ein Spannungswandler in seinem Netzteil bleiben jedoch dauerhaft mit dem Stromnetz verbunden.

Aus der US 6,339,314 B1 ist eine elektronische Schaltung zur Verminderung des Stromverbrauchs eines Transformators bekannt. Der Schaltkreis umfasst eine Steuerschaltung in einer sekundären Schaltung des Transformators und einen von der Steuerschaltung gesteuerten Schalter im primären Teil des Transformators zum Trennen der primären Schaltung von einer Energiequelle. Die Steuerschaltung umfasst einen Detektor zum Erfassen eines lastfreien Zustands des Transformators.

Aus der WO 01/52280 A1 ist eine Gerät und ein Verfahren zur Beeinflussung eines konventionellen Transformators eines Steckernetzteils bekannt. Das bekannte Gerät ist dadurch gekennzeichnet, dass ein permanent als Energiewächter arbeitender elektronischer Schaltkreis einen primären Schaltkreis des Transformators fortwährend so beeinflusst, dass ein Wechselspannungsversorgungsstrom durch den elektronischen Schaltkreis fließt und in Abhängigkeit unterschiedlicher Spannungsabfälle gesteuert wird, ob eine Transformation durchgeführt wird oder ob ein Niederspannungsverbraucher abgeschaltet wurde.

Aus der US 4,218,648 ist eine Anordnung zur Verminderung eines Stroms in einem unbelasteten, mit einer Spannung beaufschlagten Transformator offenbart. Ein TRIAC wird gezündet, solange eine Last an den Ausgang des Transformators angeschlossen ist. Fällt ein gemessener Ausgangsstrom unter einen vorgegebenen Schwellwert ab, wird der TRIAC nicht mehr gezündet und unterbricht die Stromversorgung.

Es ist daher eine Aufgabe der vorliegenden Erfindung, ein Netzteil zur Stromversorgung eines Gerätes zu schaffen, das auch ohne einen manuellen oder durch ein anderes Gerät beeinflussten Schaltvorgang und ohne eine zusätzliche Steuerleitung zwischen dem zu versorgenden Gerät und dem Netzteil eine verminderte Leistungsaufnahme im Leerlaufbetrieb aufweist.

Diese Aufgabe wird durch ein Netzteil zur Erzeugung einer sekundärseitigen Ausgangsspannung aus einer primärseitigen Netzspannung mittels eines Spannungswandlers gelöst, das ein Schaltelement zum Verbinden des Spannungswandlers mit und/oder zum Trennen des Spannungswandlers von der primärseitigen Netzspannung und eine Steuereinheit zur Ansteuerung des Schaltelements aufweist. Das Netzteil zeichnet sich dadurch aus, dass eine Messvorrichtung zur Messung einer Impedanz des Spannungswandlers vorgesehen ist, die einen Signalgenerator zur Beaufschlagung des Spannungswandlers mit einer zeitlich variierenden Spannung aufweist, ein mit dem Signalgenerator in Reihe geschalteter Messwiderstand vorgesehen ist, wobei die Messvorrichtung dazu eingerichtet ist, als Maß für die Impedanz eine Phasenverschiebung eines an dem Messwiderstand abgegriffenen Signals gegenüber einem von dem Signalgenerator abgegebenen Signal zu bestimmen und die Steuereinheit dazu eingerichtet ist, das Schaltelement in Abhängigkeit der gemessenen Impedanz einzuschalten und/oder auszuschalten.

Die Erfindung nutzt aus, dass eine Änderung der Leistungsanforderung eines an ein Netzteil angeschlossenen Gerätes sich in einer Änderung der Impedanz, also des komplexen Widerstands, gemessen an dem Spannungswandler im Netzteil bemerkbar macht. Auf diese Weise kann im Netzteil das Maß der Leistungsanforderung eines angeschlossenen Gerätes auch ohne zusätzliche Steuerleitungen zwischen Gerät und Netzteil detektiert werden und in Abhängigkeit von der detektierten Impedanz der Spannungswandler primärseitig an- oder abgeschaltet werden.

Gemäß einer vorteilhaften Ausgestaltung ist die Messvorrichtung dazu eingerichtet, die Impedanz eines Primärkreises des Spannungswandlers, also zwischen primärseitigen Anschlüssen des Spannungswandlers, zu messen. In dieser Ausgestaltung wird ausgenutzt, dass sich eine sekundärseitige Änderung in der Leistungsanforderung in einer primärseitigen Impedanzänderung niederschlägt. Die in Netzteilen eingesetzten Spannungswandler trennen in der Regel aus Sicherheitsgründen den Primär- und den Sekundärkreis galvanisch. Wenn die Impedanzmessung primärseitig erfolgt, ist somit die Messvorrichtung zur Impedanzmessung ebenfalls galvanisch vom sekundärseitigen Ausgang des Netzteils getrennt. Auf eine zusätzliche galvanische Trennung der Messvorrichtung von der Netzspannung kann somit vorteilhaft verzichtet werden.

Weitere vorteilhafte Ausgestaltungen und Weiterbildungen sind Gegenstand weiterer abhängiger Ansprüche. Im Folgenden wird die Erfindung anhand von Ausführungsbeispielen mit Hilfe von Figuren näher erläutert.

Die Figuren zeigen:
Figur 1 eine schematische Übersichtsdarstellung einer Anordnung aus einem Netzteil mit einer Messvorrichtung zur Impedanzmessung und einem Gerät als Verbraucher,
Figur 2 eine schematische Darstellung eines Netzteils mit einer Messvorrichtung zur Impedanzmessung in einem Ausführungsbeispiel,
Figur 3 eine schematische Darstellung eines Netzteils mit einer Messvorrichtung zur Impedanzmessung in einem weiteren Ausführungsbeispiel,
Figur 4 eine schematische Darstellung eines Netzteils mit einer Messvorrichtung zur Impedanzmessung und einer Strommessvorrichtung,
Figur 5 eine schematische Übersichtsdarstellung eines Netzteils mit einer Messvorrichtung zur Impedanzmessung und einer Strommessvorrichtung in einem weiteren Ausführungsbeispiel und
Figur 6 ein Zustandsdiagramm für die Betriebszustände eines Netzteils gemäß Figur 5.

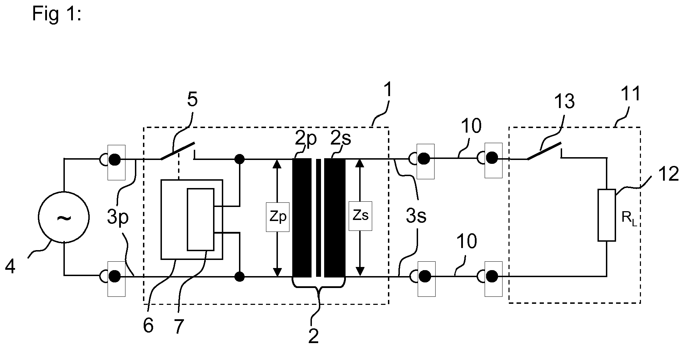

Figur 1 zeigt in einem schematischen Übersichtsdiagramm eine Anordnung aus einem Netzteil mit einer Messvorrichtung zur Impedanzmessung und einem elektrischen Gerät als Verbraucher.

Bei der Anordnung in Figur 1 ist ein Netzteil 1 vorgesehen, das über einen Spannungswandler 2 mit Primärkreis 2p und Sekundärkreis 2s verfügt. Der Primärkreis 2p weist die primärseitige Impedanz Zp und der Sekundärkreis 2s die sekundärseitige Impedanz Zs auf. Bei dem Netzteil 1 sind primärseitige Anschlüsse 3p zur Kontaktierung einer Netzspannung 4 vorgesehen. Weiterhin weist das Netzteil 1 ein Schaltelement 5 und eine Steuereinheit 6 auf, die zur Betätigung des Schaltelements 5 mit diesem verbunden ist. Das Schaltelement 5 ist zwischen einem der primärseitigen Anschlüsse 3p und dem Primärkreis 2p des Spannungswandlers 2 angeordnet, derart, dass der Primärkreis 2p je nach Ansteuerung des Schaltelements 5 mit der Netzspannung 4 beaufschlagt ist oder von der Netzspannung 4 getrennt ist. Die Steuereinheit 6 weist eine Messvorrichtung 7 auf, die mit dem Primärkreis 2P des Spannungswandlers 2 zur Bestimmung seiner Impedanz Zp verbunden ist. Das Netzteil 1 weist weiterhin sekundärseitige Anschlüsse 3S auf, mit denen das Netzteil 1 über ein Stromversorgungskabel 10 mit einem Gerät 11 verbunden ist. Das Gerät 11 umfasst einen Verbraucher 12 mit einem Lastwiderstand RL und einen Geräteschalter 13.

Bei der in Figur 1 gezeigten Anordnung ist das Netzteil 1 als externes Netzteil zur Versorgung des Geräts 11 über das Stromversorgungskabel 10 ausgeführt. Das Netzteil 1 kann als Steckernetzteil ausgestaltet sein oder auch über ein Netzanschlusskabel verfügen. Im Beispiel ist das sekundärseitige Stromversorgungskabel 10 sowohl an das Netzteil 1 als auch an das Gerät 11 angesteckt. Alternativ kann jede der Verbindungen auch fest ausgeführt sein.

Beispielhaft ist im Gerät 11 ein einfacher ohmscher Verbraucher 12, wie eine Lampe, dargestellt. Auch eine Klingel in einer Hausklingelanlage oder eine wiederaufladbare Batterie oder dergleichen ist als Verbraucher denkbar. Je nach Stellung des Geräteschalters 13 ist der Verbraucher 12 mit seinem Lastwiderstand RL parallel zum Sekundärkreis 2s des Spannungswandlers 2 geschaltet. Das Gerät 11 hat somit einen von der Stellung des Geräteschalters 13 abhängigen Leistungsbedarf. Es wird darauf hingewiesen, dass das Gerät 11 in diesem, wie auch in allen im Weiteren dargestellten Ausführungsbeispielen, ebenso ein komplexeres elektronisches Gerät, wie zum Beispiel ein tragbarer Computer oder ein Mobiltelefon, sein kann. Unter der Bezeichnung Gerät ist nachfolgend dementsprechend sowohl ein elektrisches als auch ein elektronisches Gerät zu verstehen.

Im Netzteil 1 dient der Spannungswandler 2 zur Umsetzung der Netzspannung 4 in eine meist kleinere Ausgangsspannung, die das Netzteil 1 an seinen sekundärseitigen Anschlüssen 3s bereitstellt. Weiterhin erfolgt durch den Spannungswandler 2 eine galvanische Trennung der Ausgangsspannung von der Netzspannung 4. Als Spannungswandler 2 kann beispielsweise ein Transformator vorgesehen sein. Alternativ ist auch der Einsatz von Schaltwandlern (zum Beispiel Ein-, Mehr- oder Gegentaktwandlern mit Speicherdrosseln oder Hochfrequenztransformatoren) möglich. Im dargestellten Beispiel gibt das Netzteil 1 an seinen sekundärseitigen Anschlüssen 3s eine ungeregelte Wechselspannung aus. Ebenso ist jedoch möglich, eine Gleichrichter- und/oder Stabilisierungsschaltung bei dem Netzteil 1 vorzusehen, so dass eine gleichgerichtete beziehungsweise gleichgerichtete und stabilisierte Spannung ausgegeben wird.

Bei einem Betrieb des Geräts 11 an einem Netzteil, das kein primärseitiges Schaltelement aufweist und primärseitig dauerhaft mit dem Stromnetz verbunden ist, würde das Netzteil auch bei ausgeschaltetem Geräteschalter 13, also keiner Lastanforderung durch das Gerät 11, primärseitig Leistung aufnehmen, die auch als Leerlauf- oder Stand-by-Verlustleistung oder kurz Leerlaufverlust bezeichnet wird.

Die durch das Hinzuschalten oder Wegschalten des Lastwiderstands RL geänderte Impedanz Zs im Sekundärkreis 2s bewirkt aufgrund der induktiven Kopplung zwischen Primärkreis 2p und Sekundärkreis 2S im Spannungswandler 2 auch eine Änderung der Impedanz Zp im Primärkreis 2p. Bei dem Netzteil 1 gemäß Figur 1 wird die Impedanz Zp des Primärkreises 2p von der Messvorrichtung 7 gemessen und mit vorgegebenen Schwellenwerten in der Steuereinheit 6 verglichen. Als komplexe Größe weist die Impedanz Zp einen Real- und einen Imaginäranteil auf. Zum Vergleich der Impedanz Zp mit einem vorgegebenen Schwellenwert kann entweder der Realteil, oder der Imaginärteil oder auch beide Anteile berücksichtigt werden. Abhängig von dem Ergebnis des Vergleichs der gemessenen Impedanz Zp mit den vorgegeben Schwellenwerten verbindet die Steuereinheit 6 über das Schaltelement 5 den Primärkreis 2p des Spannungswandlers 2 mit der Netzspannung 4 oder trennt ihn davon. Auf diese Weise werden die Leerlaufverluste des Spannungswandlers 2 bei ausgeschaltetem Geräteschalter 13 verhindert.

Im Folgenden wird zunächst ein Einschaltvorgang des Netzteils 1 beschrieben. Ausgangssituation ist folglich, dass sowohl der Geräteschalter 13 als auch das Schaltelement 5 ausgeschaltet sind. In diesem Betriebszustand des Netzteils 1 führt die Messvorrichtung 7 entweder kontinuierlich oder periodisch eine Impedanzmessung durch. Diese kann beispielsweise durch das Aufbringen einer zeitlich variierenden Spannung als Messsignal auf den Primärkreis 2p erfolgen. Beispielsweise erlaubt ein mit einem Signalgenerator und dem Primärkreis 2p in Reihe geschalteter Messwiderstand über die Messung einer an ihm abfallenden Spannung die Bestimmung des Stromes im so ausgestalteten Messkreis. Als Maß für die Impedanz Zp des Primärkreises 2p kann eine Phasenverschiebung zwischen dem Spannungsverlauf am Signalgenerator und am Messwiderstand bestimmt werden. Das Einschalten des Geräteschalters 13 führt dann zu einer Impedanzänderung im Primärkreis 2p, die sich in einer Änderung der gemessenen Amplitude oder der gemessenen Phase widerspiegelt. Die Änderung führt zu einem Über- oder Unterschreiten eines vorgegebenen Schwellenwertes, woraufhin die Steuereinheit 6 das Schaltelement 5 einschaltet. Das Einschalten des Schaltelements 5 führt zur Verbindung des Primärkreises 2p mit der Netzspannung, so dass das Gerät 11 mit Strom versorgt wird.

Ob ein Einschalten beim Überschreiten oder beim Unterschreiten des vorgegebenen Schwellenwertes erfolgen soll, ist davon abhängig, ob die Phase oder der Betrag der (komplexen) Impedanz gemessen wird und ist ferner durch die Art der Last bestimmt, insbesondere wenn diese hoch und/oder induktiv ist. Bei dem üblicheren Fall einer vorwiegend ohmschen Last im Sekundärkreis 2s sinkt der Betrag der Impedanz des Primärkreises 2p mit zunehmender Last. Bei einer Messung der Größe der am Messwiderstand abfallenden Spannung, die der Bestimmung des Betrags der Impedanz entspricht, ist folglich die Steuereinheit 6 so auszulegen, dass ein Unterschreiten des vorgegebenen Schwellenwertes das Schaltelement 5 einschaltet.

Durch den Aufbau der Schaltung bedingt wird nach Einschalten des Schaltelementes 5 auch der Messeingang der Messvorrichtung 7 mit der Netzspannung 4 beaufschlagt. Die Messvorrichtung 7 sollte daher so ausgelegt sein, dass das Vorliegen der Netzspannung 4 an den Messeingängen weder zur Beschädigung der Messvorrichtung 7 führt, noch die Impedanzmessung stört. Dieses ist beispielsweise dadurch möglich, dass die (Grund-) Frequenz des von dem Signalgenerator der Messvorrichtung 7 abgegebenen Messsignals, im Folgenden Messfrequenz genannt, deutlich über der Frequenz der Netzspannung liegt. Die Messvorrichtung 7 kann dann in ihren Messeingängen einen an die Messfrequenz angepassten schmalbandigen Bandpassfilter oder einen entsprechend steilen Hochpassfilter aufweisen, der ein Durchdringen der Netzspannung auf den Messwiderstand ausreichend unterdrückt.

Ein Wiederausschalten des Geräteschalters 13 führt wiederum zur Änderung der Impedanz Zp im Primärkreis 2p und zur Ausgabe eines die Impedanz Zp widerspiegelnden Messwertes von Amplitude oder Phasenverschiebung unter den vorgegebenen Schwellenwert, woraufhin die Steuereinrichtung 6 das Schaltelement 5 wiederum abschaltet.

Im Folgenden werden Ausführungsbeispiele von Netzteilen 1 mit einer Messvorrichtung zur Impedanzmessung, wie sie in der in Figur 1 gezeigten Anordnung eingesetzt werden können, detaillierter beschrieben. Gleiche Bezugszeichen kennzeichnen in allen Figuren gleiche oder gleichwirkende Elemente.

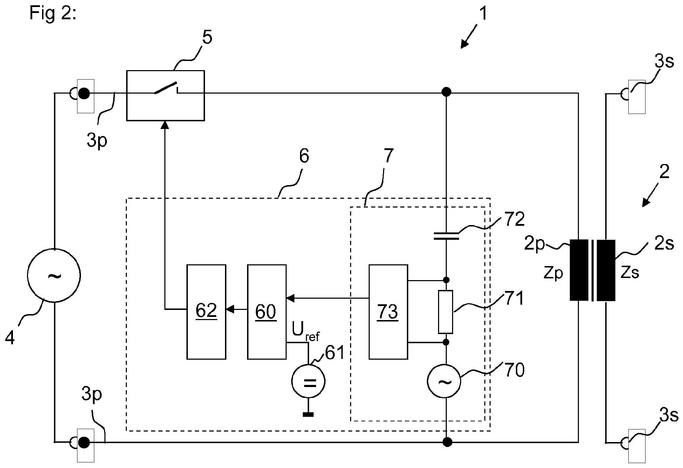

Das in der Figur 2 gezeigte Ausführungsbeispiel eines Netzteils 1 weist wiederum einen Spannungswandler 2 mit Primärkreis 2p und Sekundärkreis 2s auf. Über primärseitige Anschlüsse 3p wird eine Netzspannung 4 kontaktiert, sekundärseitige Anschlüsse 2s dienen der Stromversorgung eines hier nicht gezeigten Gerätes. Primärseitig ist ein Schaltelement 5 vorgesehen, das von einer Steuereinheit 6 angesteuert wird, die eine Messvorrichtung 7 zur Impedanzmessung aufweist.

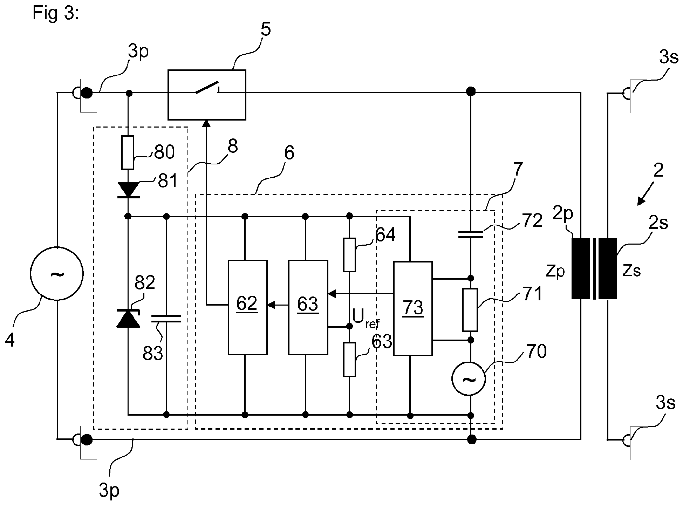

Weiterhin ist eine Hilfsstromquelle zur Stromversorgung der Steuereinheit 6 und der Messvorrichtung 7 und zur Bereitstellung des zum Betätigen des Schaltelements 5 benötigten Stroms vorgesehen. Diese ist aus Gründen der Übersichtlichkeit in Figur 2 nicht dargestellt. Für ein Ausführungsbeispiel mit dargestellter Hilfsstromquelle wird auf Figur 3.

Als Hilfsstromquelle kann ein Strom speicherndes Element, wie zum Beispiel eine Batterie, eine wiederaufladbare Batterie oder ein Kondensator, eingesetzt werden. Im Falle eines wiederaufladbaren Speicherelements ist vorteilhaft eine Ladeschaltung vorgesehen, die das Speicherelement beim Betrieb des Spannungswandlers 2 auflädt. Es ist auch möglich, eine von der Netzspannung 4 versorgte Hilfsstromquelle einzusetzen, wie weiter unten im Zusammenhang mit Figur 3 näher beschrieben ist. In jedem Fall sollte durch geeignete Dimensionierung und den Einsatz einer Strom sparenden Technologie, wie zum Beispiel der CMOS-Technologie, gewährleistet sein, dass die Hilfsstromquelle, die Steuereinheit 6 und die Messvorrichtung 7 einen geringeren Energiebedarf haben, als durch die Schaltbarkeit des Spannungswandlers 2 eingespart wird.

Im Detail umfasst die Steuereinheit 6 einen Komparator 60 mit zwei Eingängen und einem Ausgang. Einer der Eingänge ist mit einer Referenzspannung Uref beaufschlagt, die eine Referenzspannungsquelle 61 bereitstellt. Der Ausgang des Komparators 60 ist über ein Verzögerungsglied 62 mit dem Schaltelement 5 zu dessen Betätigung verbunden. Die Messvorrichtung 7 weist einen Signalgenerator 70, einen damit in Serie geschalteten Messwiderstand 71 und einen ebenfalls in Serie geschalteten Entkopplungskondensator 72 auf. Der Signalgenerator 70, der Messwiderstand 71 und der Entkopplungskondensator 72 bilden mit dem Primärkreis 2p einen geschlossenen Messkreis zur Impedanzmessung. Eine an dem Messwiderstand 71 abfallende Messspannung wird einem Messverstärker 73 zugeführt, der einen Ausgang hat, der mit dem zweiten Eingang des Komparators 60 verbunden ist.

Der Signalgenerator 70 stellt eine zeitlich variierendes Spannungssignal einer vorgegebenen Frequenz und einer vorgegebenen Signalform- und -amplitude bereit. Das Spannungssignal kann beispielsweise ein kontinuierliches oder gepulstes Wechselspannungs- oder unipolares Signal oder eine Impulsfolge sein. Der Messwiderstand 71, der Entkopplungskondensator 72 und die Induktivität des Primärkreises 2p des Spannungswandlers 2 bilden einen gedämpften Serienschwingkreis, der von dem Signalgenerator 70 angeregt wird.

In einer Ausgestaltung ist der Signalgenerator 70 eine Sinusspannungsquelle. Die Amplitude und auch der Effektivwert der an dem Messwiderstand 71 abfallenden Spannung ist bei gegebener Größe des Messwiderstands 71 und gegebener Kapazität des Entkopplungskondensators 72 und vorgegebener Frequenz des Signalgenerators 70 direkt und eindeutig von der Induktivität des Primärkreises 2p abhängig. Der Messverstärker 73 umfasst einen Gleichrichter, ein Glättungsglied und einen Spannungsverstärker und bildet die Amplitude oder den Effektivwert der an dem Messwiderstand 71 abfallenden Spannung an seinem Ausgang als Gleichspannung ab, die dann ein Maß für die gemessene Impedanz Zp des Primärkreises 2p ist. Bevorzugt wird als Messfrequenz eine deutlich über der Netzfrequenz von 50 Hz liegende Frequenz gewählt, beispielsweise eine Frequenz von mehreren Kilohertz. Besonders bevorzugt liegt die Frequenz im Ultraschallbereich, also über etwa 15 kHz, um eine störende Geräuschentwicklung des Spannungswandlers im Hörbereich zu verhindern.

Wenn sich durch eine (angeforderte) Laständerung im Sekundärkreis 2s des Spannungswandlers 2 die Impedanz Zp auch des Primärkreis 2p ändert, übersteigt die am Ausgang des Messverstärkers abgegebene Spannung die von der Referenzspannungsquelle 61 abgegebene Referenzspannung Uref, wodurch der Komparator 60 den Pegel an seinem Ausgang wechselt, beispielsweise auf einen von Null verschiedenen Wert. Dadurch wird das Verzögerungsglied 62 gestartet, welches das Schaltelement 5 betätigt, wenn der Eingang länger als eine vorgegebene Zeitspanne auf dem von Null verschiedenen Wert liegt. Das Verzögerungsglied 62 verhindert so ein unnötiges Einschalten bei nur kurzfristigen Lastwechseln oder bei Störungen, die zum Beispiel induktiv auf den Spannungswandler 2 übertragenen werden (Einschalten eines räumlich benachbarten starken Verbrauchers).

Durch das Einschalten des Schaltelementes 5 wird der Primärkreis 2p mit der Netzspannung 4 beaufschlagt und das am Sekundärkreis 2s angeschlossene Gerät wird betrieben. Gleichzeitig wird auch die Serienschaltung aus Entkopplungskondensator 72, Messwiderstand 71 und Signalgenerator 70 mit der Netzspannung 4 beaufschlagt. Der Entkopplungskondensator 72 und der Messwiderstands 71 bilden einen Hochpassfilter, der bei geeigneter Auslegung die Netzspannung 4 ausreichend unterdrückt, so dass sie weder den Eingang des Messverstärkers 73 zerstört, noch die Impedanzmessung beeinflusst. Eine solche Entkopplung des Messsignals von der Netzspannung gelingt insbesondere bei deutlich über der Netzfrequenz liegenden Frequenzanteilen des Messsignals. Zusätzlich kann im Eingang des Messverstärkers 73 eine weitere Filterschaltung, zum Beispiel ein weiterer, möglichst steiler Hochpassfilter oder ein auf die Messfrequenz abgestimmter Bandpassfilter vorgesehen sein.

Der Signalgenerator 70 kann kontinuierlich betrieben werden. Dabei sollte eine verglichen mit der Netzspannung kleine Amplitude, zum Beispiel im Bereich von einigen zehn Millivolt bis einigen Volt, gewählt werden, damit die Messung ihrerseits möglichst wenig Energie verbraucht. Alternativ ist möglich, den Signalgenerator 70 gepulst mit höheren Spannungsamplituden zu betreiben, wobei kurze Messintervalle sich mit längeren Messpausen abwechseln. Bei ausreichend hoher Messfrequenz (kHz-Bereich) sind Messintervalle im Bereich von Millisekunden für eine Impedanzmessung ausreichend. Die Messpausen können bis in den Sekundenbereich ausgedehnt werden, sollten jedoch nicht so lang sein, dass sich unerwünscht lange Einschaltverzögerungen ergeben können. Bei einfachen ohmschen Verbrauchern im Sekundärkreis 2s des Netzteils 1 führt auch bei kleiner Signalamplitude des Signalgenerators 70 eine Lastanforderung (Widerstandsänderung) zu einer Impedanzänderung des Primärkreises 2p. Bei komplexen elektronischen Verbrauchern, zum Beispiel einem tragbaren Computer, kann eine Laständerung unter Umständen wegen des hochgradig nichtlinearen Strom-Spannungszusammenhang bei diesen Verbrauchern erst bei höherer Signalamplitude über die Änderung der primärseitigen Impedanz Zp detektiert werden. Für eine solche Anwendung bietet sich der Einsatz eines gepulsten Signalgenerators 70 an.

Neben der beispielhaft angeführten Sinussignalform des Signalgenerators 70 kann auch jede andere Signalform zur Impedanzmessung herangezogen werden. Auch ist denkbar, dass ein einziger Spannungsimpuls oder eine Folge von Spannungsimpulsen zur Messung von dem Signalgenerators 70 abgegeben wird, dessen Impulsantwort als Messgröße erfasst und ausgewertet wird. Dazu ist dann der Messverstärker 73 mit einer Torschaltung zu versehen, derart, dass das Messsignal nur innerhalb eines mit dem abgegebenen Puls des Signalgenerator 70 synchronisierten Messzeitfensters erfasst wird.

Als Schaltelement 5 können elektronische oder elektromechanische Schalter Verwendung finden, zum Beispiel Triacs, Tyristoren oder Relais. Falls der Spannungswandler 2 als Schaltwandler ausgeführt ist, ist üblicherweise bereits ein elektronischer Schalter im Primärkreis vorgesehen, der dann vorteilhaft als Schaltelement 5 verwendet werden kann.

Bei der gezeigten Ausführungsform wird die Impedanzmessung am Primärkreis 2p des Spannungswandlers 2 durchgeführt, wobei in der Regel Primärkreis 2p und Sekundärkreis 2s galvanisch getrennt sind. Somit sind über den Spannungswandler 2 auch die Steuereinheit 6 und die Messvorrichtung 7 von dem Ausgang des Netzteils 2 galvanisch getrennt. Das Schaltelement 5 braucht somit keine Potentialtrennung zwischen Schaltstrecke und Betätigungseingang aufzuweisen, wodurch es beispielsweise möglich ist, ein Triac ohne einen verlustbehafteten Optokoppler einzusetzen. Grundsätzlich ist eine Impedanzmessung jedoch auch direkt im Sekundärkreis 2s möglich.

Figur 3 zeigt ein weiteres Ausführungsbeispiel eines Netzteils mit Impedanzmessung. Zusätzlich zu den bereits im Zusammenhang mit dem Ausführungsbeispiel der Figur 2 gezeigten Elementen ist eine Hilfsspannungsquelle 8 hier explizit dargestellt. Die Hilfsspannungsquelle 8 umfasst einen Vorwiderstand 80, eine Diode 81, eine Zenerdiode 82 und einen Siebkondensator 83. Über den Vorwiderstand 80 und die Diode 81 werden die positiven Halbwellen der Netzspannung 4 vor dem Schaltelement 5 abgegriffen und einer Parallelschaltung aus der Zenerdiode 82 und dem Siebkondensator 83 zugeführt, an der sich eine Hilfsspannung einstellt. Die Zenerdiode 82 begrenzt die sich am Siebkondensator 83 aufbauende Hilfsspannung auf einen nahezu konstanten Wert und der Siebkondensator 83 dient ihrer Glättung. Die Hilfsspannung wird zur Versorgung der Steuerschaltung 6 und der Messvorrichtung 7 eingesetzt, wie dieses beispielhaft an der Verbindung der Hilfsspannungsquelle 8 mit dem Verzögerungsglied 62, dem Komparator 60 und dem Messverstärker 73 gezeigt ist. Nicht dargestellt ist eine Versorgung auch des Signalgenerators 70 aus der Hilfsspannungsquelle 8. Weiterhin wird die Hilfsspannungsquelle 8 zur Erzeugung der Referenzspannung Uref mittels eines Spannungsteilers aus Spannungsteilerwiderständen 63 und 64 eingesetzt.

Die dargestellte Hilfsspannungsquelle 8 ermöglicht eine unaufwändige Spannungsversorgung von Steuerschaltung 6 und Messvorrichtung 7. Insbesondere wenn der Widerstand 80 so bemessen wird, dass ein nur geringer Strom über die Zenerdiode 82 abgeführt wird, und wenn die Steuerschaltung 6 und die Messvorrichtung 7 auf Strom sparende Weise, zum Beispiel in CMOS-Technik aufgebaut werden, führt die Hilfsspannungsquelle 8 nur zu einem geringen zusätzlichen Energiebedarf, der die Einsparungen durch das nur bedarfsgerechte Einschalten des Spannungswandlers 2 nicht übersteigt.

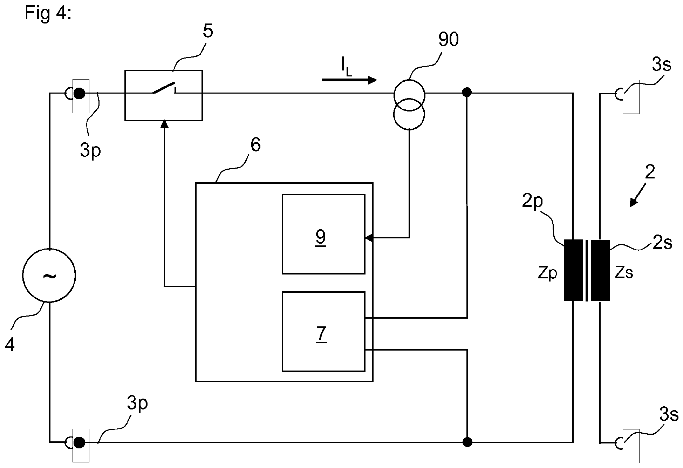

Figur 4 zeigt ein Ausführungsbeispiel eines Netzteils mit Impedanzmessung und Strommessung in einer schematischen Übersichtsdarstellung. Im Unterschied zu dem in Figur 1 gezeigten Ausführungsbeispiel weist die Steuereinheit 6 des Netzteils 1 hier zusätzlich eine Strommessvorrichtung 9 auf, mit einem Eingang, der mit einem zwischen dem Schaltelement 5 und dem Primärkreis 2p angeordneten Strommesssensor 90 verbunden ist. Bezüglich der weiteren Elemente wird auf die zuvor beschriebenen Figuren verwiesen.

Bei diesem Ausführungsbeispiel wird der Spannungswandler 2 primärseitig abhängig von der gemessenen Impedanz Zp des Primärkreis 2p eingeschaltet und abhängig von einem im Primärkreis 2p fließenden Laststrom IL abgeschaltet. Entsprechend braucht die Impedanzmessung in dieser Ausgestaltung nicht für eine Funktion während des Betriebs des Spannungswandlers 2 ausgelegt sein, was eine einfachere Realisierung ermöglicht.

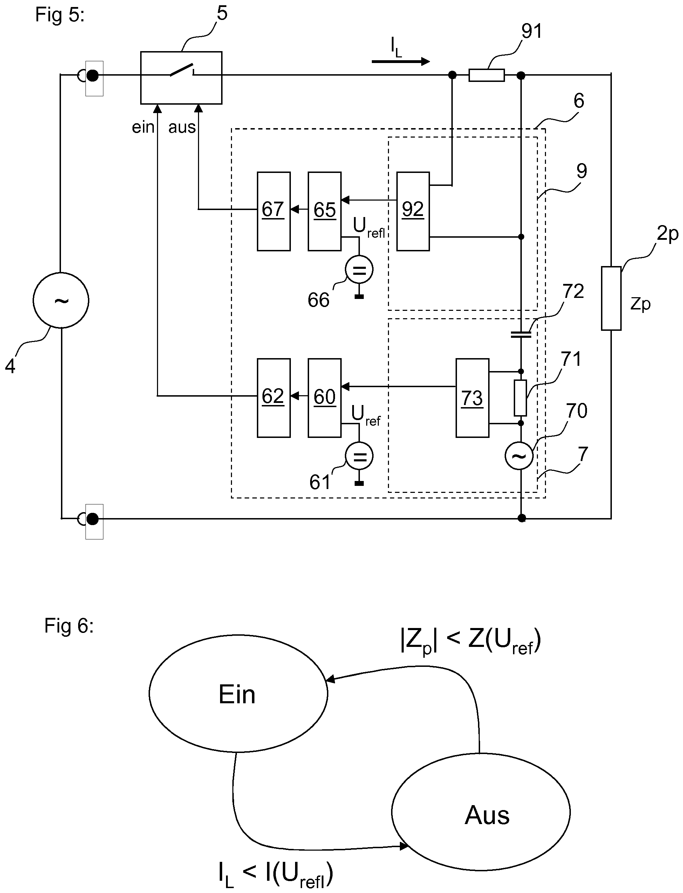

Figur 5 zeigt ein weiteres Ausführungsbeispiel eines Netzteils mit Impedanzmessung und Strommessung in einer schematischen Darstellung. Das in Figur 5 dargestellte Netzteil 1 entspricht in seiner Funktion dem im Zusammenhang mit der Figur 4 besprochenen, bei dem der Einschaltvorgang des Schaltelements 5 von der gemessenen Impedanz Zp des Primärkreises 2p abhängt und der Ausschaltvorgang von dem Laststrom IL im Primärkreis 2p. In diesem Ausführungsbeispiel ist von dem Spannungswandler 2 nur der Primärkreis 2p dargestellt, der durch seine Impedanz Zp gekennzeichnet ist. Dadurch soll nochmals verdeutlicht werden, dass als Spannungswandler 2 nicht nur ein Netztransformator, sondern jede in ihrem Primärkreis eine Induktivität aufweisende Übertragungsschaltung einsetzbar ist. Insbesondere können beim Netzteil 1 Schaltwandler, zum Beispiel mit Hochfrequenztransformatoren, als Spannungswandler eingesetzt werden.

Die Steuereinheit 6 weist eine Messvorrichtung 7 zur Impedanzmessung und einen Komparator 60 mit Referenzspannungsquelle 61, die eine Referenzspannung Uref bereitstellt, auf. Zur Ausgestaltung dieser Elemente wird auf die Beschreibung zu den Figuren 2 und 3 verwiesen. Der Ausgang des Komparators 60 ist wie zuvor mit dem Eingang eines Verzögerungsglieds 62 verbunden. Das Verzögerungsglied 62 ist hier so ausgestaltet, dass es einen Impuls an seinem Ausgang abgibt, wenn der Komparator 60 ein von Null verschiedenes Signal für länger als die im Zusammenhang mit Figur 2 beschriebene Zeitspanne ausgibt. Als Schaltelement 5 wird ein bistabiler Schalter mit einem Einschalteingang und einem Ausschalteingang eingesetzt, wobei der Einschalteingang mit dem Ausgang des Verzögerungsglieds 62 verbunden ist. Das Schaltelement 5 wird folglich durch einen Impuls am Ausgang des Verzögerungsglieds 62 eingeschaltet, wenn die gemessene Impedanz Zp des Primärkreises 2p den der Referenzspannung Uref entsprechenden Wert entsprechend lange unterschreitet.

Weiterhin weist die Steuereinheit 6 einen Strommesswiderstand 91 als Strommesssensor auf, der zwischen der Netzspannung 4 und dem Primärkreis 2s angeordnet ist und vom Laststrom IL durchflossen wird. Die an dem Strommesswiderstand 91 abfallende und zum Laststrom IL proportionale Spannung wird einem Strommessverstärker 92 zugeführt, der sie gleichrichtet und glättet und an seinem Ausgang eine ihre Amplitude oder ihren Effektivwert widerspiegelnde Spannung abgibt. Diese wird in einem weiteren Komparator 65 mit einer weiteren Referenzspannung UrefI verglichen, die eine weitere Referenzspannungsquelle 66 bereitstellt, wobei ein von Null verschiedenes Signal ausgegeben wird, wenn der Laststrom IL einen der weiteren Referenzspannung entsprechenden Wert unterschreitet. Der Ausgang des weiteren Komparators 65 wird einem weiteren Verzögerungsglied 67 zugeführt, dessen Funktion analog zu der des Verzögerungsglieds 62 ist. Der Ausgang des weiteren Verzögerungsglied 67 ist mit dem Ausschalteingang des Schaltelement 5 verbunden. Das Schaltelement 5 wird somit durch einen Impuls am Ausgang des weiteren Verzögerungsglieds 67 ausgeschaltet, wenn der gemessene Laststrom IL durch den Primärkreises 2p entsprechend lange klein genug ist.

Figur 6 zeigt den Übergang zwischen den möglichen Schaltzuständen "Ein" und "Aus" des Schaltelements 5 beim Ausführungsbeispiel aus Figur 5 nochmals in einem Zustandsdiagramm. Ein Überschreiten des gemessenen Betrags der Impedanz Zp des Primärkreises 2p unter den der vorgegebenen Referenzspannung Uref entsprechenden Betrag der Impedanz Zp führt zum Einschalten des Schaltelements 5 und damit des Spannungswandlers 2. Ein Unterschreiten des durch den Primärkreise 2p fließenden Laststroms IL unter den der vorgegebenen weiteren Referenzspannung UrefI entsprechenden Stromes führt zum Ausschalten des Schaltelements 5 und damit des Spannungswandlers 2.

### Bezugszeichenliste

- 1: Netzteil
- 2: Spannungswandler
- 2p: Primärkreis
- 2s: Sekundärkreis
- 3: Anschlüsse des Netzteils
- 3p: primärseitige Anschlüsse
- 3s: sekundärseitige Anschlüsse
- 4: Netzspannung
- 5: Schaltelement
- 6: Steuereinheit
- 7: Messvorrichtung
- 8: Hilfsstromquelle
- 9: Strommessvorrichtung

- 10: Stromversorgungskabel
- 11: Gerät
- 12: Verbraucher
- 13: Geräteschalter

- 60: Komparator
- 61: Referenzspannungsquelle
- 62: Verzögerungsglied
- 63, 64: Spannungsteilerwiderstände
- 65: weiterer Komparator
- 66: weitere Referenzspannungsquelle
- 67: weiteres Verzögerungsglied

- 70: Signalgenerator
- 71: Messwiderstand
- 72: Entkopplungskondensator
- 73: Messverstärker
- 80: Vorwiderstand
- 81: Diode
- 82: Zenerdiode
- 83: Siebkondensator

- 90: Stromsonde
- 91: Strommesswiderstand
- 92: Strommessverstärker

- Zs: sekundärseitige Impedanz
- Zp: primärseitige Impedanz
- RL: Lastwiderstand
- IL: Laststrom
- Uref: Referenzspannung
- UrefI: weitere Referenzspannung

## Patentansprüche

1. Netzteil (1) zur Erzeugung einer sekundärseitigen Ausgangsspannung aus einer primärseitigen Netzspannung (4) mittels eines Spannungswandlers (2) mit galvanischer Trennung, wobei das Netzteil (1) ein Schaltelement (5) zum Verbinden des Spannungswandlers (2) mit und/oder zum Trennen des Spannungswandlers (2) von der primärseitigen Netzspannung (4) und eine Steuereinheit (6) zur Ansteuerung des Schaltelements (5) aufweist, **dadurch gekennzeichnet, dass** eine Messvorrichtung (7) zur Messung einer Impedanz (Zp, Zs) des Spannungswandlers (2) vorgesehen ist, die einen Signalgenerator (70) zur Beaufschlagung des Primärkreis des Spannungswandlers (2) mit einer zeitlich variierenden Spannung aufweist, ein mit dem Signalgenerator (70) in Reihe geschalteter Messwiderstand (71) vorgesehen ist, wobei die Messvorrichtung (7) dazu eingerichtet ist, als Maß für die Impedanz (Zp, Zs) eine Phasenverschiebung eines an dem Messwiderstand (71) abgegriffenen Signals gegenüber einem von dem Signalgenerator (70) abgegebenen Signal zu bestimmen und die Steuereinheit (6) dazu eingerichtet ist, das Schaltelement in Abhängigkeit der gemessenen Impedanz (Zp, Zs) einzuschalten und/oder auszuschalten.

2. Netzteil (1) nach Anspruch 1, bei dem die Messvorrichtung (7) dazu eingerichtet ist, die Impedanz (Zp) des Primärkreis (2p) des Spannungswandlers (2) zu messen.

3. Netzteil (1) nach einem der Ansprüche 1 oder 2, bei dem der Signalgenerator ein sinusförmiges oder ein rechteckförmiges Signal abgibt.

4. Netzteil (1) nach einem der Ansprüche 1 bis 3, bei dem ein Hilfsstromquelle (8) zur Stromversorgung der Steuereinheit (6) und der Messvorrichtung (7)vorgesehen ist.

5. Netzteil (1) nach der Anspruch 4, bei dem die Hilfsstromquelle (8) einen Energiespeicher aufweist.

6. Netzteil (1) nach einem der Ansprüche 1 bis 5, bei dem eine Strommessvorrichtung (9) für einen Laststrom (IL) des Spannungswandlers (2) vorgesehen ist und die Steuereinheit (6) dazu eingerichtet ist, das Schaltelement (5) in Abhängigkeit der gemessenen Impedanz (Zp, Zs) des Spannungswandlers (2) einzuschalten und in Abhängigkeit des gemessenen Laststroms (IL) auszuschalten.

7. Netzteil (1) nach einem der Ansprüche 1 bis 6, bei dem der Spannungswandler (2) ein Netztransformator ist.

8. Netzteil (1) nach einem der Ansprüche 1 bis 7, bei dem der Spannungswandler (2) ein Schaltwandler ist.

9. Netzteil (1) nach Anspruch 8, bei dem ein elektronischer Schalter des Schaltwandlers als Schaltelement (5) eingesetzt wird.

## Claims

1. Power supply unit (1) for generating a secondary-side output voltage from a primary-side mains voltage (4) using a voltage converter (2) with galvanic isolation, the power supply unit (1) comprising a switch element (5) for connecting the voltage converter (2) with and/or for separating the voltage converter (2) from the primary-side mains voltage (4) and a control unit (6) for driving the switch element (5), **characterized in that** a measuring device (7) for measuring an impedance (Zp, Zs) of the voltage converter (2) is provided, which comprises a signal generator (70) for applying the primary circuit of the voltage converter (2) with a time-varying voltage, a measuring resistor (71) connected in series with the signal generator (70) is provided, wherein the measuring device (7) is adapted to determine a phase shift of a signal tapped at the measuring resistor (71) with respect to a signal output by the signal generator (70) as a measure for the impedance (Zp, Zs), and the control unit (6) is adapted to switch-on and/or switch-off the switch element depending on the measured impedance (Zp, Zs).

2. Power supply unit (1) according to claim 1, in which the measuring device (7) is adapted to measure the impedance (Zp) of the primary circuit (2p) of the voltage converter (2).

3. Power supply unit (1) according to one of claims 1 or 2, in which the signal generator outputs a sinusoidal or a rectangular signal.

4. Power supply unit (1) according to one of claims 1 to 3, in which an auxiliary power source (8) for the power supply of the control unit (6) and of the measuring device (7) is provided.

5. Power supply unit (1) according to claim 4, in which the auxiliary power source (8) comprises an energy storage.

6. Power supply unit (1) according to one of claims 1 to 5, in which a current measuring device (9) for a load current (IL) of the voltage converter (2) is provided and the control unit (6) is adapted to switch-on the switch element (5) depending on the measured impedance (Zp, Zs) of the voltage converter (2) and to switch it off depending on the measured load current (IL).

7. Power supply unit (1) according to one of claims 1 to 6, in which the voltage converter (2) is a mains transformer.

8. Power supply unit (1) according to one of claims 1 to 7, in which the voltage converter (2) is a switch-mode converter.

9. Power supply unit (1) according to claim 8, in which an electronic switch of the switch-mode converter is used as switch element (5).

## Revendications

1. Bloc d'alimentation (1) destiné à générer une tension de sortie côté secondaire à partir d'une tension de secteur côté primaire (4) à l'aide d'un convertisseur de tension (2) avec isolement galvanique, le bloc d'alimentation (1) comprenant un élément de commutation (5) destiné à connecter le convertisseur de tension (2) à la tension de secteur côté primaire (4), et/ou à séparer le convertisseur de tension (2) de celle-ci, et une unité de commande (6) destinée à exciter l'élément de commutation (5), **caractérisé en ce qu'**il est prévu un dispositif de mesure (7) destiné à mesurer une impédance (Zp, Zs) du convertisseur de tension (2), lequel comprend un générateur de signaux (70) destiné à appliquer le circuit primaire du convertisseur de tension (2) avec une tension variable dans le temps, et **en ce qu'**il est prévu une résistance de mesure (71) montée en série avec le générateur de signaux (70), dans lequel le dispositif de mesure (7) est apte à déterminer un décalage de phase d'un signal pris au niveau de la résistance de mesure (71) par rapport à un signal produit par le générateur de signaux (70) comme mesure de l'impédance (Zp, Zs), et l'unité de commande (6) est apte à rendre passant et/ou bloquant l'élément de commutation en fonction de l'impédance mesurée (Zp, Zs).

2. Bloc d'alimentation (1) selon la revendication 1, dans lequel le dispositif de mesure (7) est apte à mesurer l'impédance (Zp) du circuit primaire (2p) du convertisseur de tension (2).

3. Bloc d'alimentation (1) selon la revendication 1 ou 2, dans lequel le générateur de signaux produit un signal sinusoïdal ou rectangulaire.

4. Bloc d'alimentation (1) selon l'une quelconque des revendications 1 à 3, dans lequel il est prévu une source d'alimentation auxiliaire (8) pour l'alimentation de l'unité de commande (6) et du dispositif de mesure (7).

5. Bloc d'alimentation (1) selon la revendication 4, dans lequel la source d'alimentation auxiliaire (8) comprend un stockage d'énergie.

6. Bloc d'alimentation (1) selon l'une quelconque des revendications 1 à 5, dans lequel il est prévu un dispositif de mesure de courant (9) pour un courant de charge (IL) du convertisseur de tension (2), et l'unité de commande (6) est apte à rendre passant l'élément de commutation (5) en fonction de l'impédance mesurée (Zp, Zs) du convertisseur de tension (2) et à le rendre bloquant en fonction du courant de charge mesuré (IL).

7. Bloc d'alimentation (1) selon l'une quelconque des revendications 1 à 6, dans lequel le convertisseur de tension (2) est un transformateur de réseau.

8. Bloc d'alimentation (1) selon l'une quelconque des revendications 1 à 7, dans lequel le convertisseur de tension (2) est un convertisseur à découpage.

9. Bloc d'alimentation (1) selon la revendication 8, dans lequel un commutateur électronique du convertisseur à découpage est utilisé comme élément de commutation (5).
